Europäisches Patentamt

**European Patent Office**

Office européen des brevets

(11) Numéro de publication: **0 350 419**
**A2**

(12) # DEMANDE DE BREVET EUROPEEN

(21) Numéro de dépôt: **89440067.0**

(22) Date de dépôt: **10.07.89**

(51) Int. Cl.5: **A 23 L 1/09**
**A 23 L 1/05, A 23 G 9/02**

(30) Priorité: **08.07.88 FR 8809841**

(43) Date de publication de la demande:
**10.01.90 Bulletin 90/02**

(84) Etats contractants désignés:
**AT BE CH DE ES FR GB GR IT LI LU NL SE**

(71) Demandeur: **EPISUCRES S.A.**
**Sucrerie**
**F-67150 Erstein (FR)**

(72) Inventeur: **Lepargneux, Guy**
**Cité de la Sucrerie**
**F-67150 Erstein (FR)**

(74) Mandataire: **Arbousse-Bastide, Jean-Claude Philippe**
**CABINET ARBOUSSE BASTIDE 20, rue de Copenhague**
**F-67000 Strasbourg (FR)**

(54) **Composition à base de sucres destinée notamment à la fabrication de sorbets.**

(57) Elle renferme, en pourcent en poids, 10 à 20 % de saccharose, 20 à 40 % de sucre inverti, 0 à 10 % de fructose, 0 à 10 % de glucose, 40 à 60 % d'eau, 0,7 à 4 % d'un mélange de pectine, de gélatine et d'au moins deux autres stabilisants choisis, le premier dans le groupe que constituent les gommes naturelles, la farine de caroube et le gluco-mannane ; le second dans le groupe formé par l'agar-agar, la cellulose et ses dérivés, les esters du sorbitol et des acides gras polyoxyéthyléniques, les polyoxyéthylèneglycols, la polyvinylpyrrolidone, les silices colloïdales et les silicates d'aluminium et de magnésium.

EP 0 350 419 A2

**Description**

## COMPOSITION A BASE DE SUCRES DESTINEE NOTAMMENT A LA FABRICATION DE SORBETS.

La présente invention a pour objet une composition à base de sucres destinée notamment à la fabrication de sorbets et son procédé de fabrication.

On sait que la fabrication de sorbets met en oeuvre un certain nombre d'opérations successives, parmi lesquelles le choix d'un mélange convenable de sucres, la préparation d'un sirop à l'aide de ce mélange et d'une quantité mesurée d'eau préalablement chauffée pour faciliter la dissolution, l'homogénéisation et le refroidissement du sirop obtenu, l'incorporation à ce sirop d'un ou plusieurs stabilisants adaptés au parfum du produit, la pasteurisation éventuelle puis le refroidissement du mélange, l'incorporation de la purée de fruits, et enfin l'homogénéisation du produit obtenu préalablement à sa mise en sorbetière.

Les sucres les plus couramment utilisés dans la fabrication des sorbets sont le saccharose, en association avec du glucose ou du sucre inverti, les proportions de ces ingrédients étant variables.

Les stabilisants les plus couramment utilisés sont les gommes naturelles ou synthétiques, qui présentent des propriétés hydrophiles et sont aptes à produire, avec un faible pourcentage de matières sèches en solution, des gels ou des suspensions de viscosité élevée.

Ces stabilisants sont des constituants indispensables de ce type de produits, auxquels ils confèrent la texture souhaitée et la stabilité dans le temps, donc la conservabilité. Ils sont toutefois d'un emploi difficile, car l'utilisateur ne connaît pas toujours leur capacité d'absorption d'eau, liée au gonflement colloïdal ; il en résulte souvent des fabrications de qualités variables.

La fabrication des sorbets impose donc au glacier fabricant une succession d'opérations délicates, dont le résultat est quelque peu aléatoire, ainsi que la nécessité de disposer de stocks importants de matières premières.

La présente invention a pour but de remédier à ces inconvénients en proposant une composition pour sorbets qui facilite le travail du glacier en lui garantissant une production de qualité constante, tout en résolvant les problèmes de stockage des matières premières.

La présente invention a ainsi pour objet une composition pour sorbets directement utilisable par le glacier fabricant, car nécessitant uniquement l'adjonction d'eau et de purée de fruits.

La composition selon l'invention se caractérise essentiellement en ce qu'elle consiste en un sirop de sucres renfermant une faible proportion d'un mélange de stabilisants.

Le sirop de sucres mis en oeuvre dans la composition selon l'invention renferme avantageusement un mélange de saccharose et de sucre inverti, à raison de 10 à 20 % en poids de saccharose pour 20 à 40 % en poids de sucre inverti, ce mélange pouvant être additionné de fructose et/ou de glucose dans la limite de 10 % en poids.

Ce sirop peut être réalisé par mélange d'un sirop de saccharose avec un sirop de sucre inverti du commerce, par exemple d'un sirop de saccharose à 66 % de matières sèches avec un sirop de sucre inverti de même concentration.

Conformément à l'invention, les stabilisants mis en oeuvre dans la composition selon l'invention comprennent la pectine et la gélatine, associées à au moins un stabilisant de chacun des deux groupes ci-après.

Le premier groupe comprend les gommes naturelles comme la gomme de guar, la gomme arabique, la gomme adragante, la gomme xanthane, la gomme de caroube et la gomme de karaya ; la farine de graines ou de cosses de caroube et le gluco-mannane, extrait du bulbe d'Amorphophallus Konjac.

Le second groupe comprend l'agar-agar, les carraghénanes, la cellulose et ses dérivés, comme la carboxyméthylcellulose, la méthylcellulose, l'hydroxyéthylcellulose ou l'hydroxypropylméthylcellulose, les esters du sorbitol et des acides gras polyoxyéthyléniques, les polyoxyéthylèneglycols, les esters polyglycériques d'acides gras, les esters d'acides gras du propylèneglycol et des polyoxyéthylène glycols, la polyvinylpyrrolidone, les silices colloïdales hydrophiles ou hydrophobes et les silicates d'aluminium et de magnésium.

L'ensemble des stabilisants mis en oeuvre dans la composition selon l'invention l'est à raison de 0,7 à 4 % en poids, leurs proportions relatives étant avantageusement de l'ordre de 30 à 40 % de pectine pour 20 à 25 % de gélatine, les autres stabilisants étant en proportions égales ou non.

Le procédé de fabrication de la composition selon l'invention a fait l'objet d'une mise au point particulière, et il importe que soit respecté l'ordre des différentes étapes, ainsi que les températures mises en oeuvre, qui seuls garantissent l'obtention d'une composition satisfaisante.

Le procédé selon l'invention comprend les étapes successives suivantes, réalisées sous homogénéisation constante :

A - Introduction, dans la quantité d'eau appropriée, du sucre inverti, de la gélatine, de la pectine et des autres stabilisants ;

B - Chauffage du mélange à 70-75°C ;

C - Refroidissement du mélange à 55°C immédiatement après qu'il ait atteint la température de 70-75°C ;

D - Introduction dans le mélange à 55°C de la quantité nécessaire de saccharose, éventuellement additionné de fructose et/ou de glucose.

E - Refroidissement du mélange.

L'homogénéisation du mélange est avantageusement réalisée, tout au long des étapes de fabrication, au moyen d'un broyeur colloïdal, les matières premières étant pesées sur une balance de précision.

La composition est de préférence conditionnée en cours de refroidissement lorsque la température atteint environ 45°C, pour des raisons de viscosité.

La composition selon l'invention permet de réaliser facilement toutes sortes de sorbets : il suffit en effet d'incorporer à une quantité donnée de cette composition, sous homogénéisation, la quantité voulue de purée de fruits, généralement comprise entre 1 et 2 fois le poids de composition mise en oeuvre, et une quantité d'eau comprise entre 0,5 et 1 fois ce poids.

Les sorbets obtenus présentent, outre d'excellentes qualités organoleptiques, de bonnes qualités de conservation dans le temps.

En particulier la texture des produits est agréablement veloutée et lisse, sans aucun effet collant, et les sorbets obtenus offrent une bonne résistance à la fonte.

Les exemples ci-après fournissent, à titre indicatif et non limitatif, une illustration de la composition selon l'invention, de son mode de fabrication et de sorbets à base de cette composition.

### EXEMPLE 1.

#### Préparation d'une composition selon l'invention.

Dans un mélangeur en acier inoxydable, type FRYMA, on introduit 17,65 litres d'eau sous vide de 800 millibars maintenu pendant toute la durée de la fabrication.

On ajoute ensuite, sous agitation, 60,31 kg de sirop de sucre inverti à 66 % de matières sèches, 0,34 kg de gélatine M 175 de SANOFI-BIO-INDUSTRIES, 0,52 kg de pectine LM 325 NH 95 du même fournisseur, 0,45 kg de gomme de guar "Viscogum HV 3000 A" du même fournisseur et 0,22 kg d'agar-agar type 500 gel de la Société WOLFF.

Le mélange est homogénéisé au moyen d'un broyeur colloïdal en fonctionnement pendant toute la durée de la fabrication, puis chauffé à 72-75°C, sous homogénéisation.

Dès que la température de 72-75°C est atteinte, le mélange est refroidi à 55°C, sous homogénéisation, puis additionné de 20,51 kg de sirop de saccharose à 66 % de matières sèches, toujours sous homogénéisation.

Le mélange est ensuite refroidi à environ 45°C, le vide est alors coupé dans le mélangeur et le conditionnement effectué en fûts de matière plastique de 5 litres ou 10 litres.

Le produit obtenu présente la composition ci-après, exprimée en pourcent en poids :

| | |
|---|---|
| Saccharose | 13,54 |
| Sucre inverti | 39,80 |
| Agar Agar | 0,22 |
| Gélatine | 0,34 |
| Pectine | 0,52 |
| Gomme de guar | 0,45 |
| Eau | 45,13. |

### EXEMPLE 2.

En procédant de la même façon qu'à l'exemple 1 on obtient un sirop stabilisé présentant la composition suivante, exprimée en pourcent en poids :

| | |
|---|---|
| Saccharose | 17,63 |
| Sucre inverti | 24,52 |
| Glucose | 5,47 |
| Gélatine | 0,46 |
| Pectine | 0,98 |
| Gomme de caroube | 0,46 |
| Garraghénane | 0,17 |
| Carboxyméthylcellulose | 0,23 |
| Eau | 50,08. |

### EXEMPLE 3.

#### Préparation de sorbets.

On obtient des sorbets d'excellente qualité, avec un bon foisonnement, en mélangeant les ingrédients ci-après dans les proportions indiquées :

1) Sorbets de fruits rouges.
- 1 kg de purée de fruits.
- 300 à 500 g d'eau.
- 500 à 700 g de la composition de l'exemple 1 ou 2.

2) Sorbets de fruits acides.
- 150 g de concentré de citron.
- 600 à 800 g d'eau.
- 800 à 900 g de la composition de l'exemple 1 ou 2.

3) Sorbets de fruits exotiques.
- 500 g de purée de fruits.
- 500 à 700 g d'eau.
- 600 à 700 g de la composition de l'exemple 1 ou 2.

Bien entendu, la présente invention ne saurait être limitée aux exemples qui précèdent et qui en décrivent des modes de réalisation susceptibles de subir un certain nombre de modifications sans pour autant sortir du cadre de l'invention.

La composition selon l'invention, ainsi qu'il a déjà été dit, offre la possibilité de réaliser rapidement des sorbets dont la texture et les qualités organoleptiques sont tout à fait satisfaisantes.

Elle permet ainsi au glacier-fabricant de produire une grande variété de sorbets de bonne qualité sans avoir à stocker de nombreuses matières premières et en lui évitant une succession d'opérations longues et délicates, ce qui constitue un avantage particulièrement appréciable.

**Revendications**

1) Composition à base de sucres destinée notamment à la fabrication de sorbets, caractérisée en ce qu'elle renferme, en pourcent en poids :
- 10 à 20 % de saccharose
- 20 à 40 % de sucre inverti
- 0 à 10 % de fructose
- 0 à 10 % de glucose
- 40 à 60 % d'eau
- 0,7 à 4 % d'un mélange de pectine, de gélatine et d'au moins deux autres stabilisants choisis :
- le premier dans le groupe que constituent les gommes naturelles, la farine de caroube et le gluco-mananne ;
- le second dans le groupe formé par l'agar-agar, la cellulose et ses dérivés, les esters du sorbitol et des acides gras polyoxyéthyléniques, les polyoxyéthylèneglycols, les esters polyglycériques d'acides gras, les esters d'acides gras du propylèneglycol et des polyoxyéthylèneglycols, la polyvinylpyrrolidone, les silices colloïdales et les silicates d'aluminium et de magnésium ;
les proportions relatives de ces stabilisants étant de l'ordre de 30 à 40 % en poids de pectine pour 20 à 25 % en poids de gélatine, les autres stabilisants étant mis en oeuvre en proportions égales ou non.

2) Composition selon la revendication 1, caractérisée en ce qu'elle renferme, en pourcent en poids :

- Saccharose          13,54
- Sucre inverti       39,80
- Pectine             0,52
- Gélatine            0,34
- Agar-Agar           0,22
- Gomme de guar       0,45
- Eau                 45,13

3) Procédé de préparation d'une composition selon la revendication 1, caractérisé en ce qu'il comporte les étapes successives ci-après, réalisées chacune sous homogénéisation constante :

A - Introduction, dans la quantité d'eau appropriée, du sucre inverti, de la gélatine, de la pectine et des autres stabilisants.

B - Chauffage du mélange à 70-75°C.

C - Refroidissement du mélange à 55°C dès qu'il atteint la température de 70-75°C.

D - Introduction dans le mélange à 55°C de la quantité nécessaire de saccharose, éventuellement additionné de fructose et/ou de glucose.

E - Refroidissement du mélange.

4) Procédé selon la revendication 3 de préparation de la composition selon la revendication 2, caractérisé en ce que l'étape A consiste à introduire dans un mélangeur 17,65 litres d'eau, puis 60,31 kg de sirop de sucre inverti à 66 % de matières sèches, 0,34 kg de gélatine, 0,52 kg de pectine, 0,45 kg de gomme de guar et 0,22 kg d'agar-agar, et l'étape D à introduire dans le mélange à 55°C 20,51 kg de sirop de saccharose à 66 % de matières sèches.